# EUROPEAN PATENT APPLICATION

(11) **EP 4 645 735 A1**
(43) Date of publication of application: **05.11.2025**
(21) Application number: 23914614.5
(22) Date of filing: 29.12.2023
(51) Int. Cl.: H04L 5/00

(54) **COMMUNICATION METHOD, AND COMPUTER READABLE STORAGE MEDIUM**

(30) Priority: 06.01.2023 CN 202310020842
(71) Applicant: ZTE Corporation, Shenzhen, Guangdong 518057 (CN)
(72) Inventor: LIU, Na, Shenzhen, Guangdong 518057 (CN)
(74) Representative: Ziebig Hengelhaupt Intellectual Property Attorneys Patentanwaltskanzlei PartGmbB
(86) International application number: PCT/CN2023/143546
(87) International publication number: WO 2024/146483

(57) **Abstract**

Provided are a communication method, and a computer readable storage medium. The communication method comprises: aggregating at least one second terminal with a first terminal; and performing data transmission with the first terminal on the basis of the at least one second terminal.

## Description

The present disclosure claims a priority of Chinese Patent Application No. 202310020842.2, filed on January 6, 2023, the entire content of which is incorporated in the present disclosure by reference.

### TECHNICAL FIELD

The present disclosure relates to the field of communication technologies, and in particular, a communication method, and a computer-readable storage medium.

### BACKGROUND

With the rapid development of mobile communication networks, more and more communication scenarios have emerged and become popular rapidly. In some communication scenarios, e.g., multimedia live broadcast or vertical application data uploading, etc., requirements for data transmission rate and transmission latency are becoming increasingly higher.

Generally, carrier aggregation (CA) and/or dual connectivity (DC) are often adopted for data transmission in the related art. However, when the carrier aggregation is adopted, a terminal needs to aggregate multiple carriers before transmission; and when the dual connectivity is adopted, the terminal needs to maintain connection with two base stations or wireless standards at the same time. Therefore, when the carrier aggregation and/or the dual connectivity are adopted for data transmission, the terminal needs to transmit carriers through multiple physical layer interfaces when communicating.

### SUMMARY

In an aspect, embodiments of the present disclosure provide a communication method, applied to a base station. The communication method includes: aggregating at least one second terminal with a first terminal; and performing data transmission with the first terminal based on the at least one second terminal.

In another aspect, the embodiments of the present disclosure provide a communication method, applied to a first terminal. The communication method includes: aggregating with at least one second terminal; and performing data transmission with a base station based on the at least one second terminal.

In yet another aspect, the embodiments of the present disclosure provide a communication method, applied to a second terminal. The communication method includes: aggregating with a first terminal; and assisting the first terminal to perform data transmission with a base station.

In yet another aspect, the embodiments of the present disclosure provide a communication apparatus. The communication apparatus includes: a memory and a processor. The memory is coupled to the processor. The memory is configured to store instructions executable by the processor. The processor, upon executing the instructions, enables the communication apparatus to implement the communication method described in any one of the above-mentioned aspects.

In yet another aspect, the embodiments of the present disclosure provide a computer-readable storage medium. The computer-readable storage medium has computer program instructions stored thereon. The computer program instructions, upon being executed by a computer, implement the communication method described in any one of the above-mentioned aspects.

In yet another aspect, the embodiments of the present disclosure provide a computer program product. The computer program product includes computer program instructions. The computer program instructions, upon being executed by a processor, implement the communication method described in any one of the above-mentioned aspects.

### BRIEF DESCRIPTION OF THE DRAWINGS

In order to explain the technical solutions in the present disclosure more clearly, the drawings required to be used in some embodiments of the present disclosure will be introduced briefly below. It is obvious that the drawings in the following description below are merely drawings of some embodiments of the present disclosure, and for a person of ordinary skill in the art, other drawings may also be obtained according to these drawings.
FIG. 1 is a schematic diagram of a carrier aggregation scenario according to some embodiments of the present disclosure.
FIG. 2 is a schematic structural diagram of a communication system according to some embodiments of the present disclosure.
FIG. 3 is a schematic structural diagram of another communication system according to some embodiments of the present disclosure.
FIG. 4 is a schematic structural diagram of yet another communication system according to some embodiments of the present disclosure.
FIG. 5 is a schematic structural diagram of yet another communication system according to some embodiments of the present disclosure.
FIG. 6 is a schematic flowchart of yet another communication method according to some embodiments of the present disclosure.
FIG. 7 is a schematic flowchart of yet another communication method according to some embodiments of the present disclosure.
FIG. 8 is a schematic flowchart of yet another communication method according to some embodiments of the present disclosure.
FIG. 9 is a schematic flowchart of yet another communication method according to some embodiments of the present disclosure.
FIG. 10 is a schematic flowchart of yet another communication method according to some embodiments of the present disclosure.
FIG. 11 is a schematic flowchart of yet another communication method according to some embodiments of the present disclosure.
FIG. 12 is a schematic flowchart of yet another communication method according to some embodiments of the present disclosure.
FIG. 13 is a schematic flowchart of yet another communication method according to some embodiments of the present disclosure.
FIG. 14 is a schematic flowchart of yet another communication method according to some embodiments of the present disclosure.
FIG. 15 is a schematic flowchart of yet another communication method according to some embodiments of the present disclosure.
FIG. 16 is a schematic flowchart of yet another communication method according to some embodiments of the present disclosure.
FIG. 17 is a schematic flowchart of yet another communication method according to some embodiments of the present disclosure.
FIG. 18 is a schematic structural diagram of a communication apparatus according to some embodiments of the present disclosure.
FIG. 19 is a schematic structural diagram of another communication apparatus according to some embodiments of the present disclosure.

### DETAILED DESCRIPTION

In order to make a person skilled in the art to better understand the technical solutions of the embodiments of the present disclosure, the technical solutions in the present disclosure will be described below clearly and completely, in conjunction with the drawings in the present disclosure, and obviously, the described embodiments are only a part of the embodiments of the present disclosure, not all of the embodiments. Based on the embodiments of the present disclosure, all other embodiments obtained by those ordinary skilled in the art without paying inventive efforts fall within the scope of protection of the present disclosure.

It should be noted that in the present disclosure, the expressions, such as "exemplarily (exemplary)" or "for example" are used to represent examples, illustrations, or descriptions. Any embodiment or design solution described with "exemplarily (exemplary)" or "for example" in the present disclosure should not be interpreted as being more preferred or advantageous than other embodiments or design solutions. Specifically, the usage of the expressions such as "exemplarily (exemplary)" or "for example", etc., is intended to present related concepts in a specific manner.

Hereinafter, the terms such as "first", "second", etc., are used only for descriptive purposes and cannot be construed as indicating or implying relative importance or implicitly indicating the number of the indicated technical features. Thus, features limited with "first", "second", etc., may explicitly or implicitly include one or more of the features.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represent three cases: only A, A and B, and only B. Additionally, "at least one" means one or more, and "multiple/plurality of" means two or more.

As described in the background, with the rapid development of mobile communication networks, more and more communication scenarios have emerged and become popular rapidly. In some communication scenarios, e.g., multimedia live broadcast or vertical application data uploading, etc., requirements for data transmission rate and transmission latency, etc., are becoming increasingly higher.

In order to increase a data transmission rate, carrier aggregation and/or dual connectivity are often adopted for data transmission in the related art. For ease of understanding, the carrier aggregation technology and the dual connectivity technology are first introduced below.

### (1) Carrier aggregation

Carrier aggregation aggregates multiple carrier components (CCs) as an entirety to transmit or receive a signal through spectrum aggregation.

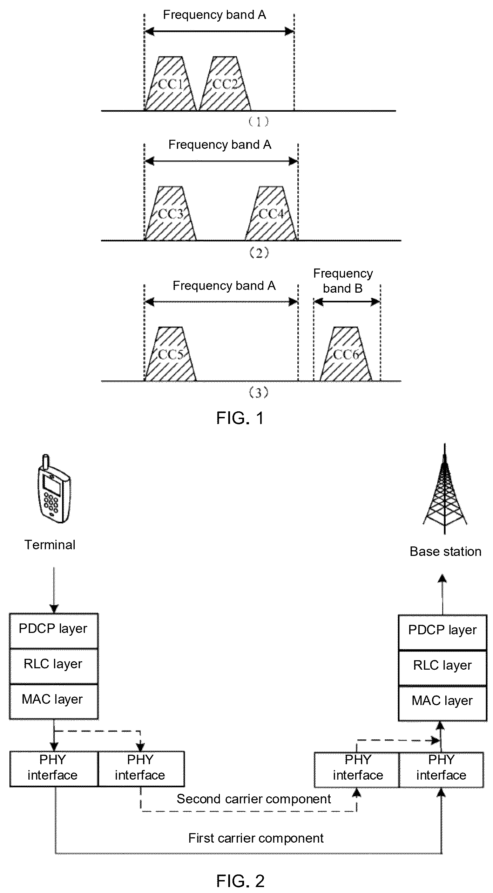

FIG. 1 shows a schematic diagram of a carrier aggregation scenario. (1) in FIG. 1 shows a scenario of consecutive carrier aggregation of intra-frequency band. It can be seen that carrier components required to be aggregated (e.g., CC1 and CC2) are within a same frequency band (e.g., a frequency band A), and there is no gap between the carrier components to be aggregated. (2) in FIG. 1 shows a scenario of non-consecutive carrier aggregation of intra-frequency band. It can be seen that the carrier components required to be aggregated are in the same frequency band (e.g., a frequency band A), but there is a gap between at least two carrier components (e.g., CC3 and CC4). (3) in FIG. 1 shows a scenario of non-consecutive carrier aggregation of inter-frequency band. It can be seen that the carrier components required to be aggregated are not within a same frequency band. For example, CC5 is located in the frequency band A and CC6 is located in a frequency band B. Based on the carrier aggregation scenario shown in FIG. 1, non-consecutive spectrum resources may be aggregated together, thereby improving the utilization of spectrum resources.

FIG. 2 shows a schematic structural diagram of a communication system, and the communication system applies the carrier aggregation technology. As shown in FIG. 2, the communication system includes a terminal and a base station, and the terminal performs data transmission with the base station at least through a first carrier component and a second carrier component.

FIG. 2 only shows a manner for the terminal to perform uplink data transmission with the base station. It can be seen that the terminal performs data transmission with the terminal based on the first carrier component and the second carrier component. After passing through a packet data convergence protocol (PDCP) layer, a radio link control (RLC) layer, and a media access control (MAC) of the terminal, uplink data transmitted from the terminal is divided into two paths by two different physical layer (PHY) interfaces of the terminal, that is, data transmission is performed with the base station in a form of first carrier component and a form of second carrier component, respectively.

Referring to FIG. 1 and FIG. 2, it can be seen that when the carrier aggregation is adopted for data transmission, the terminal needs to transmit carriers through at least two physical layer interfaces, so a transmission power of a single carrier is relatively low, and the data transmission rate and throughput are relatively low.

### (2) Dual connectivity

In the dual connectivity technology, a terminal may transmit and receive data through two different base stations. For example, the terminal may access two independently operated cell groups, the two independently operated cell groups may be controlled by two different base stations, and the two base stations may adopt different wireless standards.

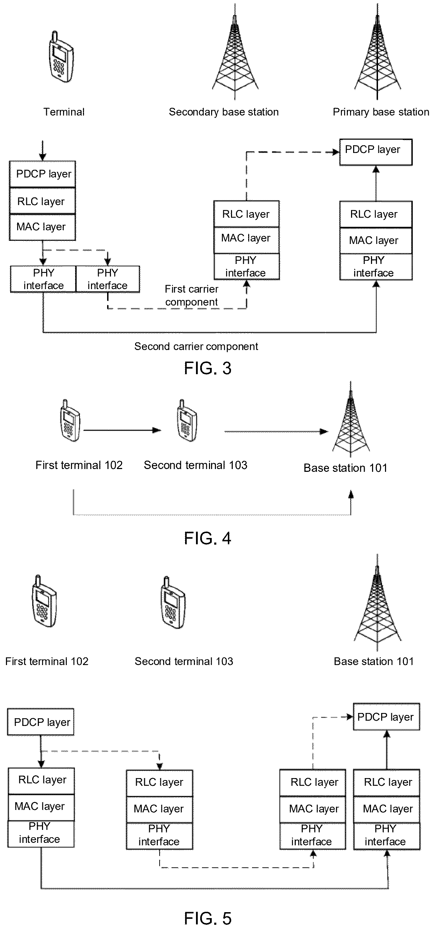

Exemplarily, FIG. 3 shows a schematic structural diagram of another communication system, and the communication system employs the dual connectivity technology. As shown in FIG. 3, the communication system includes a terminal, a primary base station and a secondary base station. It can be seen that when the manner of dual connectivity is adopted for data transmission, the terminal needs to maintain connection with the primary base station and the secondary base station at the same time. FIG. 3 only shows the manner in which the terminal performs uplink data transmission. Referring to FIG. 3, after passing through the PDCP layer, the RLC layer, and the MAC layer of the terminal, the data transmitted from the terminal passes through two different PHY interfaces to perform data transmission with the base station in a form of first carrier component and in a form of second carrier component, respectively. For example, the first carrier component is transmitted to the PDCP layer of the primary base station through the PHY interface, the MAC layer, and the RLC layer of the secondary base station, and the second carrier component is transmitted to the PDCP layer of the primary base station through the PHY interface, the MAC layer, and the RLC layer of the primary base station, thereby implementing uplink data transmission of the terminal with the primary base station

Based on FIG. 3, it can be seen that when the dual connection technology is adopted for data transmission, the terminal also needs to transmit carriers through at least two physical layer interfaces. Since the transmission power of the terminal is limited, the transmission power of the single carrier is relatively low, and the data transmission rate and throughput are also relatively low.

That is, since the transmission power of the terminal is limited, in a case where the terminal needs to transmit carriers through multiple physical layer interfaces, the transmission power of the terminal will be allocated to multiple carriers as a number of carriers increases. This results in that the transmission power of the single carrier becomes low, and thus the data transmission rate and the throughput are also relatively low.

In view of this, the embodiments of the present disclosure provide a communication method, and the communication method includes: aggregating at least one second terminal with a first terminal; and performing data transmission with the first terminal based on the at least one second terminal.

Based on this, it can enable that the first terminal may perform data transmission with the base station based on the at least one second terminal, so the transmission power is no longer limited to the transmission power of the single terminal (e.g., the first terminal), thereby increasing the data transmission rate and the throughput.

For ease of understanding, the communication system involved in the embodiments of the present disclosure is introduced below. FIG. 4 shows a schematic structural diagram of a communication system provided in the embodiments of the present disclosure.

Referring to FIG. 4, a communication system 100 includes: a base station 101, a first terminal 102, and a second terminal 103.

The base station 101 is used to perform data transmission with the first terminal 102. In some embodiments, the base station 101 performs directly data transmission with the first terminal 102. In some other embodiments, the base station 101 performs data transmission with the first terminal 102 through the second terminal 103. It should be understood that the form of the base station includes, but is not limited to, a macro base station, a micro base station (also referred to as a small station), a relay station, an access point, etc. In systems adopting different wireless access technologies, the names of base stations or devices with base station functions may be different. For example, in the fifth generation system, it is referred to as a radio access network (RAN); in the long term evolution (LTE) system, it is referred to as an evolved NodeB (eNB or eNodeB); and in a third generation (3G) system, it is referred to as Node B, etc. The embodiments of the present disclosure do not limit thereto.

The first terminal 102 is a terminal device that needs to perform data transmission with the base station. The terminal device may also be referred to as a terminal, a user equipment (UE), a mobile station, a mobile terminal, etc. The terminal device may be a mobile phone, a tablet computer, a computer with a wireless transceiving function, a virtual reality terminal device, an augmented reality terminal device, a wireless terminal in industrial control, a wireless terminal in unmanned driving, a wireless terminal in remote surgery, a wireless terminal in transportation safety, a wireless terminal in smart city, a wireless terminal in smart home, etc. The embodiments of the present disclosure do not limit the technology and the device form adopted for the terminal device.

The second terminal 103 is a terminal device used to assist the first terminal 102 to perform data transmission with the base station 101. The content of the terminal device may refer to the description for the first terminal 102 in the above, which will not be repeated herein. In some embodiments, the second terminal 103 may be one or multiple second terminals.

It should be noted that the status of the first terminal and the status of the second terminal may be switched to each other, that is, a terminal may be used as the first terminal or also as the second terminal. For example, when the terminal is used as a primary terminal for communicating with the base station, the terminal is the first terminal. For another example, when the terminal assists other terminals to perform communication with the base station, the terminal is the second terminal. The embodiments of the present disclosure do not limit thereto.

In some embodiments, the first terminal may have other names, e.g., an anchor terminal. The second terminal may have other names, e.g., an aggregation terminal, which is not limited.

In some embodiments, based on the communication system shown in FIG. 4, FIG. 5 further shows a schematic structural diagram of yet another communication system.

Referring to FIG. 5, the first terminal performing uplink data transmission with the base station is taken as an example. In some embodiments, as shown by a solid line in FIG. 5, after passing through the PDCP layer of the first terminal, the data transmitted from the first terminal 102 may pass through the RLC layer, the MAC layer and the PHY interface of the first terminal sequentially and is transmitted to the base station 101.

In some other embodiments, as shown by a dash line in FIG. 5, after passing through the PDCP layer of the first terminal 102, the data transmitted from the first terminal 102 may pass through the RLC layer, the MAC layer and the PHY interface of the second terminal from the PDCP layer and is transmitted to the base station 101.

Accordingly, the base station reports the data received by the PHY layer interface of the base station (e.g., the data directly transmitted from the first terminal 102 and/or the data transmitted from the first terminal 102 through at least one second terminal 103) layer by layer through the MAC layer, the RLC layer and the PDCP layer of the base station, so that the base station obtains all data transmitted from the first terminal 102.

Similarly, when downlink data transmission is performed between the base station and the first terminal, the data may be transferred in an inverse direction with reference to the data flow shown in FIG. 5, which will not be introduced in detail in the present disclosure.

It can be seen that, since the data is forwarded through the PDCH layer of the first terminal when the first terminal transmits data to the at least one second terminal, at most one PHY interface of the first terminal is called. It is considered that the function of the first terminal is limited and the transmission power of data will decrease as a number of PHY interfaces increases, and thus in a case where at most one PHY interface of the first terminal is called, the transmission power of the first terminal is increased, thereby increasing the data transmission rate and data throughput of the first terminal.

It should be noted that the above-mentioned communication system may also have other names (e.g., a communication network, a network system, a network architecture or a communication architecture, etc.), and the above-mentioned communication system may further include other structures, e.g., a core network element, etc. The embodiments of the present disclosure do not limit thereto.

It should be understood that the above-mentioned communication system is only to explain the technical solutions of the present disclosure more clearly, and does not constitute a limitation on the present disclosure. A person of ordinary skill in the art may know that, with the evolution of the network architecture and the emergence of new business scenarios, the technical solutions provided in the present disclosure are also applicable to similar technical problems.

In addition, the communication method provided in the embodiments of the present disclosure may be applied to systems of multiple communication standards. For example, the communication method provided in the embodiments of the present disclosure may be applicable to systems including, but not limited to, long term evolution (LTE) systems, various versions based on LTE evolution, 5th generation (5G) systems, and next generation communication systems, such as new radio (NR), etc. In addition, the communication method provided in the embodiments of the present disclosure may also be applicable to future-oriented communication technologies, etc.

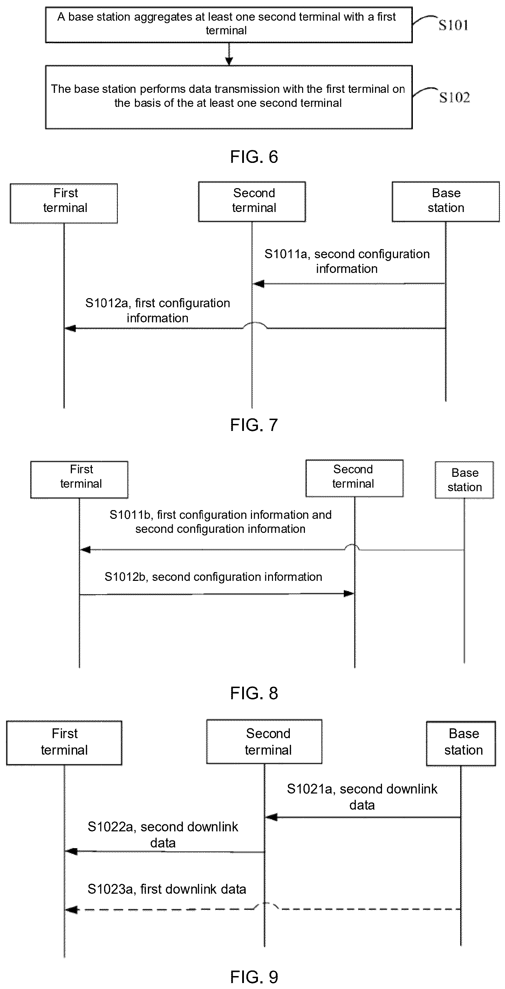

As shown in FIG. 6, a communication method is provided in the embodiment of the present disclosure, which is introduced below by taking an execution body being a base station as an example. Referring to FIG. 6, the communication method includes the following S101 and S102.

In S101, a base station aggregates at least one second terminal with a first terminal.

In some embodiments, the base station implements aggregation of the at least one second terminal with the first terminal through first configuration information and second configuration information. For ease of understanding of the solutions, the relevant contents of the first configuration information and the second configuration information are explained below first.

### (1) First configuration information

In some embodiments, the first configuration information includes: identification information of the at least one second terminal, and/or configuration information of data radio bearer (DRB) information that needs to be aggregated in the first terminal.

In some embodiments, the configuration information of the DRB information that needs to be aggregated in the first terminal includes at least one of: PDCP configuration of the DRB information that needs to be aggregated in the first terminal, RLC configuration of the DRB information that needs to be aggregated in the first terminal, and logical channel (LCH) configuration of the DRB information that needs to be aggregated in the first terminal.

In some embodiments, the PDCP configuration of the DRB information that needs to be aggregated in the first terminal includes at least one of: an aggregation direction indication, an aggregation threshold indication, an aggregation primary path indication, and a duplication (replication) indication.

As an example, the aggregation direction indication includes: uplink direction indication/downlink direction indication.

As an example, the aggregation primary path may be used to indicate a terminal through which the data transmission passes.

As an example, the duplication indication may be used to indicate whether data transmitted or received by the at least one second terminal is the same as that by the first terminal. For example, the data transmitted from the second terminal to the base station may be duplicated data of the data transmitted from the first terminal to the base station.

### (2) Second configuration information

In some embodiments, the second configuration information includes: identification information of the first terminal, and/or aggregation configuration information of DRB information that needs to be aggregated in the at least one second terminal.

In some embodiments, the aggregation configuration information of the data radio bearer (DRB) information that needs to be aggregated in the at least one second terminal includes: RLC configuration of the DRB information that needs to be aggregated in the at least one second terminal; and/or, logical channel LCH configuration of the DRB information that needs to be aggregated in the at least one second terminal.

It should be explained that the manner of performing terminal aggregation through the first configuration information and the second configuration information will be explained in detail below, the contents of which may refer to the embodiments shown in FIG. 7, FIG. 8, and FIGS. 9 to 17, which will not be repeated herein.

In S102, the base station performs data transmission with the first terminal based on the at least one second terminal.

In some embodiments, the base station may transmit second downlink data to the at least one second terminal; and the at least one second terminal receives the second downlink data transmitted from the base station, and transmits the second downlink data to the first terminal. In this way, data transmission may also be performed without calling the PHY interface of the first terminal, and in addition, the base station may transmit downlink data to the first terminal through one or more second terminals, thereby increasing the data transmission rate and the throughput of downlink.

In some embodiments, the base station may also transmit first downlink data to the first terminal while transmitting the second downlink data to the at least one second terminal. The first downlink data may be the same as or different from the second downlink data, which are not limited in the present disclosure. In this way, when the base station transmits downlink data to the first terminal, the base station may transmit the downlink data (e.g., the first downlink data) directly to the first terminal, or transmit the downlink data (e.g., the second downlink data) to the first terminal through the at least one second terminal, thereby increasing the data transmission rate and the throughput of downlink.

In some embodiments, whether the first downlink data is the same as the second downlink data may be determined based on the first configuration information and the second configuration information. For example, whether the first downlink data is the same as the second downlink data may be specified by the duplication indication, which is not limited in the embodiments of the present disclosure.

It can be seen that the above content shows a situation where downlink communication of a base station with a first terminal is implemented based on at least one second terminal. Similarly, uplink communication of the first terminal with the base station may also be implemented based on the at least one second terminal.

In some embodiments, the first terminal may transmit second uplink data to the at least one second terminal; and the at least one second terminal receives the second uplink data transmitted from the first terminal, and transmits the second uplink data to the base station. In this way, data transmission may be performed without calling the PHY interface of the first terminal, so that the transmission power of the carrier is no longer limited by the maximum transmission power of the first terminal, thereby increasing the uplink transmission power of the carrier; and in addition, the base station may acquire the data transmitted from the first terminal through one or more second terminals, thereby increasing the data transmission rate and the throughput of uplink.

In some embodiments, the first terminal may also transmit first uplink data to the base station while transmitting the second uplink data to the at least one second terminal. The first uplink data may be the same as or different from the second uplink data, which are not limited in the present disclosure. In this way, when a carrier is transmitted, both the PHY interface of the first terminal and the PHY interface of the second terminal may be called, so that the transmission power of the carrier no longer depends on only the maximum transmission power of the first terminal, but on a sum of maximum transmission powers of the first terminal and the at least one second terminal, thereby increasing the uplink transmission power of the carrier. In addition, when the first terminal transmits uplink data to the base station, the first terminal may transmit the uplink data (e.g., the first uplink data) directly to the base station, or transmit the uplink data (e.g., the second uplink data) to the base station through the at least one second terminal, thereby increasing the data transmission rate and the throughput of uplink.

In some embodiments, the first terminal is aggregated with the at least one second terminal, and the first terminal performs the data transmission with the base station based on the at least one second terminal.

In some other embodiments, the second terminal is aggregated with the first terminal, and the second terminal assists the first terminal to perform data transmission with the base station.

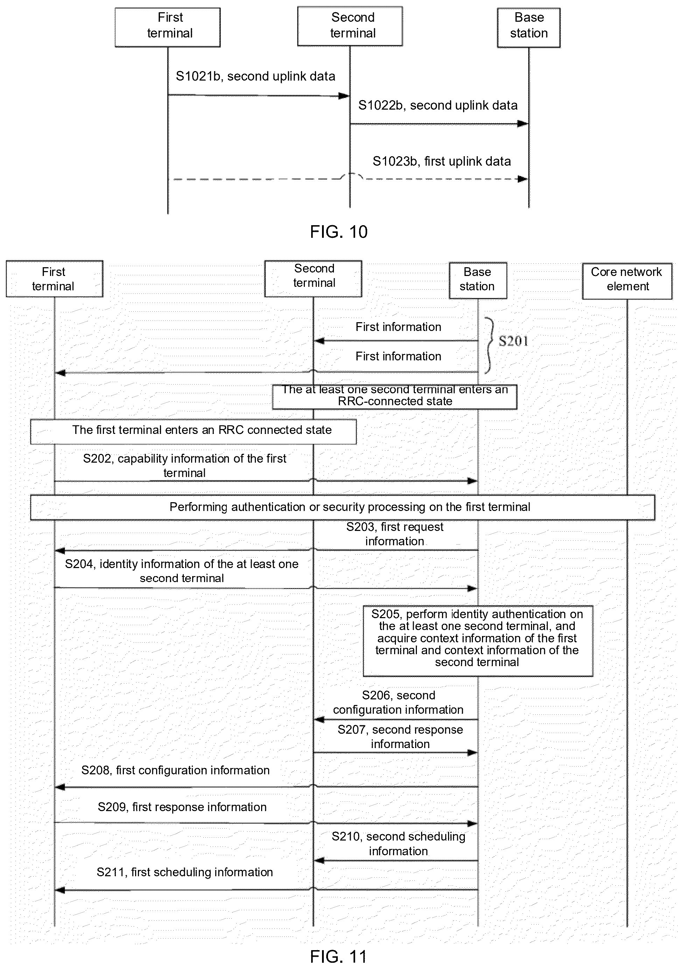

For ease of understanding, the data transmission manner of the base station, the first terminal and the at least one second terminal will be described in detail below, for example, which may refer to the embodiments shown in FIG. 9 or FIG. 10 and will not be repeated herein.

In the communication method provided in the embodiments of the present disclosure, a first terminal may be aggregated with at least one second terminal, so that the first terminal may perform data transmission with a base station through the at least one second terminal, and thus transmission power is no longer limited to a transmission power of a single terminal (e.g., the first terminal), thereby increasing the data transmission rate and the throughput.

In some embodiments, as shown in FIG. 7, S101 may be, for example, implemented as the following S1011a and S1012a.

In S1011a, the base station transmits second configuration information to the at least one second terminal. Accordingly, the second terminal acquires the second configuration information.

The second configuration information is used to perform aggregation-related configuration on the second terminal. The second configuration information may refer to the description in the above-mentioned S101, which will not be repeated herein.

In some embodiments, the second terminal is aggregated with the first terminal according to the second configuration information.

In some embodiments, S1011a is, for example, implemented as: transmitting, by the base station, an RRC reconfiguration request to the at least one second terminal, where the RRC reconfiguration request carries the second configuration information.

In some embodiments, after acquiring the second configuration information, the second terminal may further transmit second response information to the base station. As an example, the second response information is used to indicate whether the reception of the second configuration information succeeds or fails. As another example, the second response information is used to indicate whether the aggregation for the second terminal succeeds or fails.

In S1012a, the base station transmits first configuration information to the first terminal. Accordingly, the first terminal acquires the first configuration information.

The first configuration information is used to perform aggregation-related configuration on the first terminal. The first configuration information may refer to the description in the above-mentioned S101, which will not be repeated herein.

In some embodiments, the first terminal is aggregated with the at least one second terminal according to the first configuration information.

In some embodiments, S1012a is, for example, implemented as: transmitting, by the base station, a radio resource control reconfiguration (RRC reconfiguration) request to the first terminal, where the RRC reconfiguration request carries the first configuration information.

In some embodiments, after acquiring the first configuration information, the first terminal may further transmit first response information to the base station. As an example, the first response information is used to indicate whether the reception of the first configuration information succeeds or fails. As another example, the first response information is used to indicate whether the aggregation of the first terminal succeeds or fails.

It should be noted that the embodiments of the present disclosure do not limit the order of S1011a and the order of S1012a.

Based on this, the aggregation of the first terminal with the at least one second terminal may be completed through the base station.

In some other embodiments, as shown in FIG. 8, S101 may be, for example, implemented as the following S1011b to S1012b.

In S1011b, the base station transmits first configuration information and second configuration information to the first terminal. Accordingly, the first terminal receives the first configuration information and the second configuration information.

The first configuration information is used to perform aggregation-related configuration on the first terminal; and the second configuration information is used to perform aggregation-related configuration on the second terminal. The first configuration information and the second configuration information may refer to the description in above-mentioned S101, which will not be repeated herein.

In some embodiments, the first terminal is aggregated with the at least one second terminal according to the first configuration information.

In some embodiments, S1011b is, for example, implemented as: transmitting, by the base station, an RRC reconfiguration request to the first terminal, where the RRC reconfiguration request carries the first configuration information and the second configuration information.

In some embodiments, after acquiring the first configuration information and the second configuration information, the first terminal may further transmit third response information to the base station. As an example, the third response information is used to indicate whether the reception of the first configuration information and the reception of the second configuration information succeed or fail. As another example, the third response information is used to indicate whether the aggregation of the first terminal succeeds or fails.

In S1012b, the first terminal transmits the second configuration information to the second terminal. Accordingly, the second terminal acquires the second configuration information.

In some embodiments, the first terminal transmits the second configuration information to the second terminal through delivery of RRC configuration.

In some embodiments, the second terminal is further aggregated with the first terminal according to the second configuration information.

In some embodiments, after acquiring the second configuration information, the second terminal may further transmit fourth response information to the first terminal. As an example, the fourth response information is used to indicate whether the reception of the second configuration information succeeds or fails. As another example, the fourth response information is used to indicate whether the aggregation for the second terminal succeeds or fails.

Based on this, the aggregation of the first terminal with the at least one second terminal may be completed by assisting the base station through the first terminal.

In some embodiments, as shown in FIG. 9, S102 may be, for example, implemented as the following: S1021a to S1023a.

In S1021a, the base station transmits second downlink data to the at least one second terminal. Accordingly, the at least one second terminal receives the second downlink data transmitted from the base station.

In S1022a, the at least one second terminal transmits the second downlink data transmitted from the base station to the first terminal. Accordingly, the first terminal receives downlink data transmitted from the at least one second terminal.

In S1023a, the base station transmits first downlink data to the first terminal. Accordingly, the first terminal receives the first downlink data transmitted from the base station.

In some embodiments, the first downlink data may be the same as or different from the second downlink data, which are not limited in the present disclosure.

In some embodiments, the first terminal may further summarize the received downlink data. For example, the first terminal may summarize all received second downlink data. For another example, the first terminal may summarize all the second downlink data and all the first downlink data.

It should be noted that the above-mentioned S1023a is not mandatory and the embodiments of the present disclosure do not limit thereto.

In this way, downlink data transmission or downlink communication of the base station with the first terminal may be implemented based on the at least one second terminal.

In some embodiments, as shown in FIG. 10, S102 may be, for example, implemented as the following: S1021b to S1023b.

In S1021b, the first terminal transmits second uplink data to the at least one second terminal. Accordingly, the at least one second terminal receives the second uplink data transmitted from the first terminal.

In S1022b, the at least one second terminal transmits the second uplink data transmitted from the first terminal to the base station. Accordingly, the base station receives the second uplink data transmitted from the at least one second terminal.

In S1023b, the first terminal transmits first uplink data to the base station. Accordingly, the base station receives the first uplink data transmitted from the first terminal.

In some embodiments, in S1021b and S1023b, the first uplink data may be the same as or different from the second uplink data, which are not limited in the present disclosure.

In some embodiments, the base station may further summarize the received uplink data to obtain the complete uplink data transmitted from the first terminal. For example, the base station may summarize all received second uplink data. For another example, the base station may summarize all the second uplink data and all the first uplink data. The manner for data summarizing is not limited in the embodiments of the present disclosure.

In some embodiments, the base station may further deliver the received uplink data. As an example, the base station may deliver the received uplink data to a core network element, e.g., an access and mobility management function (AMF), etc. As an example, the uplink data delivered by the base station may be data-summarized data.

It should be noted that the above-mentioned S1023b is not mandatory. For example, the first terminal may only transmit uplink data to the second terminal, and the second terminal delivers the uplink data transmitted from the first terminal to the base station. The embodiments of the present disclosure do not limit thereto.

In this way, uplink data transmission or uplink communication of the first terminal with the base station may be implemented based on the at least one second terminal.

In some embodiments, the base station may further transmit first information, where the first information is used to indicate that a current cell supports terminal aggregation. As an example, the first information may be system information (SI) or system information block (SIB).

In some embodiments, the base station may further acquire capability information of the first terminal, where the capability information of the first terminal is used to indicate whether the first terminal has aggregation capability.

As an example, the base station may acquire the capability information of the first terminal in the following manner: receiving the capability information of the first terminal transmitted from the first terminal. For example, when the first terminal needs to perform service communication, the first terminal initiates an RRC connection and transmits the capability information of the first terminal to the base station. Accordingly, the base station receives the capability information of the first terminal transmitted from the first terminal.

As another example, the base station may acquire the capability information of the first terminal in the following manner: receiving the capability information of the first terminal transmitted from the core network element. For example, when the first terminal needs to perform service communication, the first terminal enters an RRC connected state and transmits the capability information of the first terminal to the core network element. Accordingly, the base station receives the capability information of the first terminal transmitted from the core network element.

In some embodiments, the base station may further acquire identity information of the at least one second terminal. Exemplarily, the base station may acquire the identity information of the second terminal in the following manner: receiving the identity information of the at least one second terminal transmitted from the core network element; or, receiving the identity information of the at least one second terminal transmitted from the first terminal; or, determining the identity information of the at least one second terminal according to an aggregation relationship pre-configured by the base station and the identity information of the first terminal, where the aggregation relationship is used to indicate a correspondence between the identity information of the first terminal and the identity information of the at least one second terminal.

In some embodiments, the identity information of the second terminal includes at least one of: S-temporary mobile subscription identifier (S-TMSI); international mobile subscriber identification number (IMSI) information; cell radio network temporary identifier (C-RNTI), physical cell identity (PCI), and truncated integrity message authentication code (short) MAC-I information; user equipment aggregation identifier (UE aggregation ID) information.

As an example, the base station may receive S-TMSI or IMSI information transmitted from the core network element.

As another example, the base station may receive S-TMSI or IMSI information transmitted from the first terminal.

As yet another example, the base station may receive C-RNTI, PCI and short MAC-I information transmitted from the first terminal.

As yet another example, the base station may receive UE aggregation ID information transmitted from the first terminal.

As yet another example, the base station may pre-configure an aggregation relationship, where the aggregation relationship is used to indicate a correspondence between the identity information of the first terminal and the identity information of at least one second terminal. Thus, the base station may determine the identity information of the at least one second terminal corresponding to the first terminal from the aggregation relationship according to the identity information of the first terminal. In an example, the base station may determine, from the aggregation relationship, the identity information of the at least one second terminal that may be aggregated with the first terminal.

In some embodiments, in a case where the at least one second terminal is in a radio resource control (RRC) idle state, the base station transmits a paging message to the at least one second terminal according to the identity information of the at least one second terminal. Accordingly, in a case where the paging message has been received, the second terminal is switched from the radio resource control RRC idle state to the RRC connected state. Based on this, the at least one second terminal may be in the RRC connected state, which is convenient for the base station to transmit the second configuration information through an RRC channel of the second terminal.

For example, when the at least one second terminal is in an RRC idle (RRC-IDLE) state or an RRC inactive (RRC-Inactive) state, the base station transmits a paging message to the at least one second terminal according to the S-TMSI information of the at least one second terminal. Accordingly, in a case where the paging message has been received, the second terminal is switched from the RRC-IDLE state or the RRC-Inactive state to the RRC connected (RRC_connected) state.

In order to explain the solution more clearly, based on the method shown in FIG. 6, some examples provided in the embodiments of the present disclosure are shown in FIG. 11 to FIG. 17. It should be noted that the second terminal shown in FIG. 11 to FIG. 17 may be a single second terminal or multiple second terminals, and the embodiments of the present disclosure do not limit thereto. The second terminal being the at least one second terminal is explained below.

In some embodiments, the first terminal is at a far point in a cell and is in an RRC-IDLE state; the at least one second terminal is at a near point in the cell and is in an RRC-Connected state, and the at least one second terminal is performing downlink service; and the first terminal is in wired connection with the at least one second terminal. As shown in FIG. 11, the communication method includes the following S201 to S211.

In S201, the base station transmits a first message. Accordingly, the first terminal and/or the at least one second terminal receives the first message.

The first message is used to indicate that the current cell supports the terminal aggregation.

In some embodiments, the base station broadcasts the first message in the current cell. Accordingly, the first terminal and/or the at least one second terminal residing in the current cell receives the first message.

In some embodiments, when the first terminal needs to perform service communication, the first terminal enters an RRC connected state.

In some embodiments, when the first terminal needs to perform the service communication and the current cell supports the terminal aggregation, the following S202 is performed.

In S202, the first terminal transmits capability information of the first terminal to the base station. Accordingly, the base station receives the capability information of the first terminal.

In some embodiments, S202 is, for example, implemented as: transmitting, by the first terminal, an RRC setup complete (RRCSetupComplete) information to the base station, where the RRCSetupComplete information carries the capability information of the first terminal.

In some embodiments, before the first terminal transmits the capability information of the first terminal to the base station, the above-mentioned communication method may further include: the second terminal entering the RRC connected state; and the first terminal entering the RRC connected state.

In some embodiments, after the first terminal transmits the capability information of the first terminal to the base station, the above-mentioned communication method may further include: performing, by the base station, authentication or security processing on the first terminal.

In S203, the base station transmits first request information to the first terminal, where the first request information is used to request identity information of the at least one second terminal. Accordingly, the first terminal receives the first request information.

In some embodiments, the first request information may include: a terminal information request (UEInformationRequest) message, and/or a terminal capability enquiry (UECapabilityEnquiry) message. The embodiments of the present disclosure do not limit thereto.

In S204, the first terminal transmits the identity information of the at least one second terminal to the base station. Accordingly, the base station acquires the identity information of the at least one second terminal.

For example, in a case where the first request information is the terminal information request (UEInformationRequest) message, the first terminal transmits a terminal information response (UEInformationResponse) message to the base station, and the UEInformationResponse message carries the identity information of at least one second terminal.

For another example, in a case where the first request information is the terminal capability enquiry (UECapabilityEnquiry) message, the first terminal transmits terminal capability information (UECapabilitylnformation) to the base station, and the UECapabilitylnformation carries the identity information of at least one second terminal.

In S205, the base station performs identity authentication on the at least one second terminal, and acquires context information of the first terminal and context information of the second terminal.

In some embodiments, the base station performs the identity authentication on the at least one second terminal according to the identity information of the at least one second terminal.

In some embodiments, after the identity authentication on the at least one second terminal is passed, the context information of the at least one second terminal is acquired.

In S206, the base station transmits second configuration information to the at least one second terminal. Accordingly, the at least one second terminal acquires the second configuration information.

The second configuration information may refer to the description above, which will not be repeated herein.

In some embodiments, S206 is, for example, implemented as: transmitting, by the base station, an RRC reconfiguration request to the at least one second terminal, where the RRC reconfiguration request carries the second configuration information.

In some embodiments, the at least one second terminal is aggregated with the first terminal according to the second configuration information.

In S207, the second terminal transmits second response information to the base station. Accordingly, the base station receives the second response information.

In some embodiments, the second response information is used to indicate whether the reception of the second configuration information succeeds or fails.

In some embodiments, the second response information is used to indicate whether the aggregation for the second terminal succeeds or fails.

In some embodiments, the second response information is RRC reconfiguration complete information. The embodiments of the present disclosure do not limit the implementation form of the second response information.

In S208, the base station transmits first configuration information to the first terminal. Accordingly, the first terminal acquires the first configuration information.

The first configuration information may refer to the description above, which will not be repeated herein.

In some embodiments, S208 is, for example, implemented as: transmitting, by the base station an RRC reconfiguration request to the first terminal, where the RRC reconfiguration request carries the first configuration information.

In some embodiments, the first terminal is aggregated with the at least one second terminal according to the first configuration information.

In S209, the first terminal transmits first response information to the base station. Accordingly, the base station receives the first response information.

In some embodiments, the first response information is used to indicate whether the reception of the first configuration information succeeds or fails.

In some embodiments, the first response information is used to indicate whether the aggregation of the first terminal succeeds or fails.

In some embodiments, the first response information is the RRC reconfiguration complete information. The embodiments of the present disclosure do not limit the implementation form of the first response information.

In S210, the base station transmits second scheduling information to the at least one second terminal. Accordingly, the at least one second terminal receives the second scheduling information transmitted from the base station.

In some embodiments, the second scheduling information is used to schedule a time domain resource and/or a frequency domain resource when the second terminal performs the data transmission.

In some embodiments, the second scheduling information includes physical downlink control channel (PDCCH) downlink control information (DCI).

In S211, the base station transmits first scheduling information to the first terminal. Accordingly, the first terminal receives the first scheduling information transmitted from the base station.

In some embodiments, the first scheduling information is used to schedule a time domain resource and/or a frequency domain resource when the first terminal performs the data transmission.

In some embodiments, the first scheduling information includes physical downlink control channel (PDCCH) downlink control information (DCI).

In some embodiments, after S211, a data link has been established among the base station, the first terminal, and the at least one second terminal; and the data communication may be performed based on the at least one second terminal. For example, reference may be made to the description of the above-mentioned S102, S1021a to S1023a, and S1021b to S1023b, which will not be repeated herein.

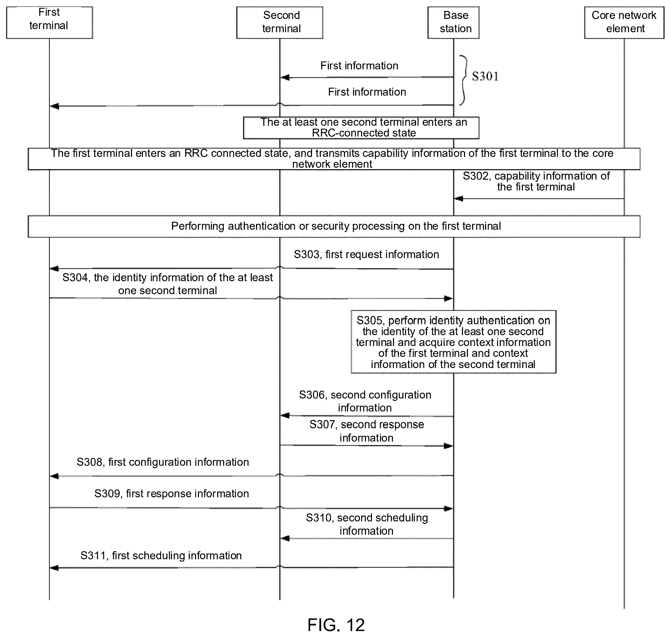

In some other embodiments, the first terminal is at a near point in a cell and in an RRC-IDLE state; the at least one second terminal is at a near point in the cell and in an RRC-Connected state, and the at least one second terminal is performing downlink service; and the first terminal is connected with the at least one second terminal via Bluetooth. As shown in FIG. 12, the communication method includes the following S301 to S311.

In S301, the base station transmits a first message. Accordingly, the first terminal and/or the at least one second terminal receives the first message.

The S301 may refer to the description in 201, which will not be repeated herein.

In S302, the core network transmits capability information of the first terminal to the base station. Accordingly, the base station receives the capability information of the first terminal.

In some embodiments, the core network element may transmit terminal content setup (UEContextSetup) information/terminal content modification (UEContextModification) information to the base station, where the UEContextSetup information or the UEContextModification carries the capability information of the first terminal.

In some embodiments, before the core network transmits the capability information of the first terminal to the base station, the communication method further includes: the first terminal entering an RRC connected state, and the first terminal transmitting the capability information of the first terminal to the core network element. For example, the first terminal may transmit network attached storage (NAS) information to the core network element, where the NAS information carries the capability information of the first terminal.

In some embodiments, before the core network transmits the capability information of the first terminal to the base station, the communication method further includes: the at least one second terminal entering an RRC connected state.

In some embodiments, after the core network transmits the capability information of the first terminal to the base station, the above-mentioned communication method may further include: performing, by the base station, authentication or security processing on the first terminal.

In S303, the base station transmits first request information to the first terminal, where the first request information is used to request identity information of the at least one second terminal. Accordingly, the first terminal receives the first request information.

S303 may refer to the description in S203, which will not be repeated herein.

In S304, the first terminal transmits the identity information of the at least one second terminal to the base station. Accordingly, the base station acquires the identity information of the at least one second terminal.

S304 may refer to the description in S204, which will not be repeated herein.

In S305, the base station performs identity authentication on the at least one second terminal and acquires context information of the first terminal and context information of the second terminal.

In some embodiments, the base station performs the identity authentication on the at least one second terminal according to the identity information of the at least one second terminal.

In S306, the base station transmits second configuration information to the at least one second terminal. Accordingly, the at least one second terminal acquires the second configuration information.

S306 may refer to the description in S206, which will not be repeated herein.

In S307, the second terminal transmits second response information to the base station. Accordingly, the base station receives the second response information.

S307 may refer to the description in S207, which will not be repeated herein.

In S308, the base station transmits first configuration information to the first terminal. Accordingly, the first terminal acquires the first configuration information.

S308 may refer to the description in S208, which will not be repeated herein.

In S309, the first terminal transmits first response information to the base station. Accordingly, the base station receives the first response information.

S309 may refer to the description in S209, which will not be repeated herein.

In S310, the base station transmits second scheduling information to the at least one second terminal. Accordingly, the at least one second terminal receives the second scheduling information transmitted from the base station.

S310 may refer to the description in S210, which will not be repeated herein.

In S311, the base station transmits first scheduling information to the first terminal. Accordingly, the first terminal receives the first scheduling information transmitted from the base station.

S311 may refer to the description in S211, which will not be repeated herein.

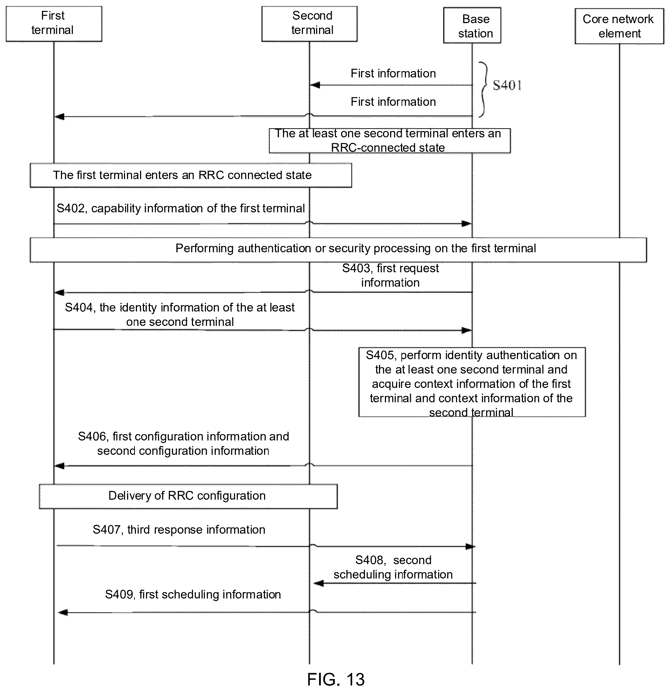

In yet some embodiments, the first terminal is at a far point in a cell and is in an RRC-IDLE state; the at least one second terminal is at a near point in the cell and is in an RRC-Connected state, and the at least one second terminal is performing downlink service; and the first terminal is in wired connection with the at least one second terminal. As shown in FIG. 13, the communication method includes the following S401 to S409.

In S401, the base station transmits a first message. Accordingly, the first terminal and/or the at least one second terminal receives the first message.

S401 may refer to the description in S201, which will not be repeated herein.

In S402, the first terminal transmits capability information of the first terminal to the base station. Accordingly, the base station receives the capability information of the first terminal.

S402 may refer to the description in S202, which will not be repeated herein.

In S403, the base station transmits first request information to the first terminal, where the first request information is used to request identity information of the at least one second terminal. Accordingly, the first terminal receives the first request information.

S403 may refer to the description in S203, which will not be repeated herein.

In S404, the first terminal transmits the identity information of the at least one second terminal to the base station. Accordingly, the base station acquires the identity information of the at least one second terminal.

S404 may refer to the description in S204, which will not be repeated herein.

In S405, the base station performs identity authentication on the at least one second terminal and acquires context information of the first terminal and context information of the second terminal.

S405 may refer to the description in S205, which will not be repeated herein.

In S406, the base station transmits first configuration information and second configuration information to the first terminal. Accordingly, the first terminal acquires the first configuration information and the second configuration information.

The first configuration information and the second configuration information may refer to the description above, which will not be repeated herein.

In some embodiments, S406 is, for example, implemented as: transmitting, by the base station, an RRC reconfiguration request to the first terminal, where the RRC reconfiguration request carries the first configuration information and the second configuration information.

In some embodiments, the first terminal transmits the second configuration information to the at least one second terminal. For example, the first terminal delivers the second configuration information to the second terminal through the delivery of the RRC configuration.

In some embodiments, after the at least one second terminal has acquired the second configuration information, the at least one second terminal may further be aggregated with the first terminal according to the second configuration information.

In S407, the first terminal transmits third response information to the base station. Accordingly, the base station receives the third response information.

In some embodiments, the third response information is used to indicate whether the reception of the first configuration information and the reception of the second configuration information succeed or fail.

In some embodiments, the third response information is used to indicate whether the aggregation of the first terminal succeeds or fails.

In some embodiments, the third response information is RRC reconfiguration complete information. The embodiments of the present disclosure do not limit the implementation form of the third response information.

In S408, the base station transmits second scheduling information to at least one second terminal. Accordingly, the at least one second terminal receives the second scheduling information transmitted from the base station.

S408 may refer to the description in S210, which will not be repeated herein.

In S409, the base station transmits first scheduling information to the first terminal. Accordingly, the first terminal receives the first scheduling information transmitted from the base station.

S409 may refer to the description in S211, which will not be repeated herein.

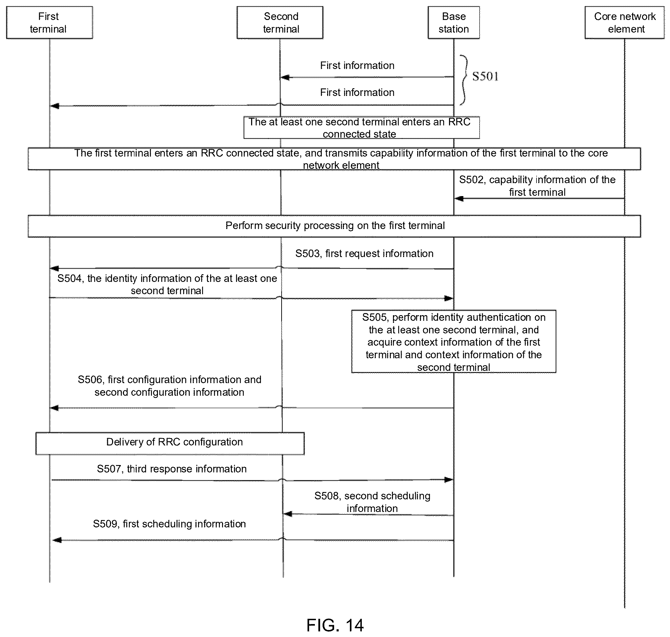

In yet some embodiments, the first terminal is at a near point in a cell and in an RRC-IDLE state; the at least one second terminal is at a near point in the cell and in an RRC-Connected state, and the at least one second terminal is performing a downlink service; and the first terminal is connected with the at least one second terminal via wifi. As shown in FIG. 14, the communication method includes the following S501 to S509.

In S501, the base station transmits a first message. Accordingly, the first terminal and/or the at least one second terminal receives the first message.

S501 may refer to the description in S201, which will not be repeated herein.

In S502, the core network transmits capability information of the first terminal to the base station. Accordingly, the base station receives the capability information of the first terminal.

S502 may refer to the description in S202, which will not be repeated herein.

In some embodiments, after the capability information of the first terminal has been received, security processing is further performed on the first terminal.

In S503, the base station transmits first request information to the first terminal, where the first request information is used to request identity information of the at least one second terminal. Accordingly, the first terminal receives the first request information.

S503 may refer to the description in S203, which will not be repeated herein.

In S504, the first terminal transmits the identity information of the at least one second terminal to the base station. Accordingly, the base station acquires the identity information of the at least one second terminal.

S504 may refer to the description in S204, which will not be repeated herein.

In S505, the base station performs identity authentication on the at least one second terminal, and acquires context information of the first terminal and context information of the second terminal.

S505 may refer to the description in S205, which will not be repeated herein.

In S506, the base station transmits first configuration information and second configuration information to the first terminal. Accordingly, the first terminal acquires the first configuration information and the second configuration information.

S506 may refer to the description in S406, which will not be repeated herein.

In S507, the first terminal transmits third response information to the base station. Accordingly, the base station receives the third response information.

S507 may refer to the description in S407, which will not be repeated herein.

In S508, the base station transmits second scheduling information to at least one second terminal. Accordingly, the at least one second terminal receives the second scheduling information transmitted from the base station.

S508 may refer to the description in S210, which will not be repeated herein.

In S509, the base station transmits first scheduling information to the first terminal. Accordingly, the first terminal receives the first scheduling information transmitted from the base station.

S509 may refer to the description in S211, which will not be repeated herein.

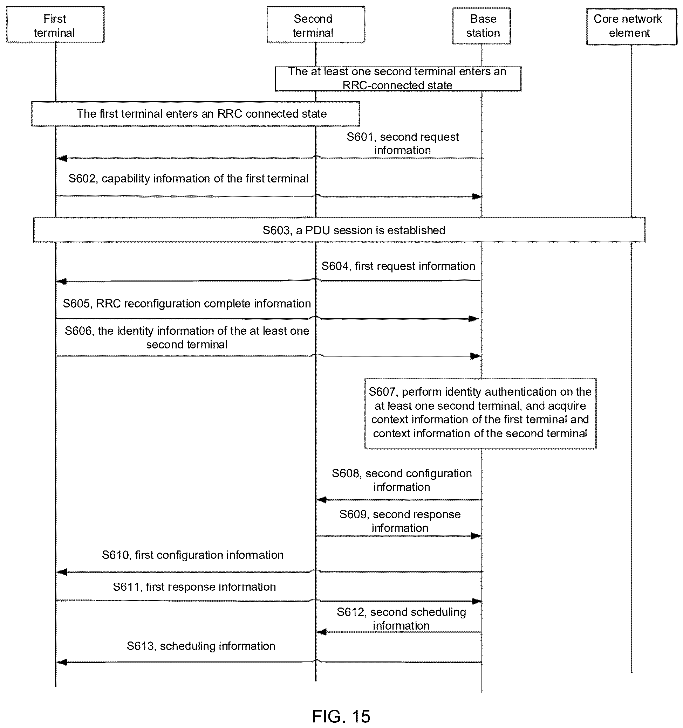

In some embodiments, in a case where it is defaulted that the current cell supports terminal aggregation, the base station may no longer transmit the first message. As shown in FIG. 15, the communication method includes the following S601 to S613.

In S601, the base station transmits second request information to the first terminal, where the second request information is used to request capability information of the first terminal. Accordingly, the first terminal receives the second request information.

In some embodiments, the second request information may be UECapabilityEnquiry message. The embodiments of the present disclosure do not limit the form of the second request information.

In some embodiments, before S601, the communication method further includes: the at least one second terminal entering an RRC connected state; and the first terminal entering an RRC connected state.

In S602, the first terminal transmits the capability information of the first terminal to the base station.

In some embodiments, the first terminal transmits terminal capability enquiry UECapabilitylnformation to the base station, where the UECapabilitylnformation carries the capability information of the first terminal.

For example, after receiving the UECapabilityEnquiry message, the first terminal transmits terminal capability information (UECapabilitylnformation) to the base station, where UECapabilitylnformation includes newly added aggregation capability indicator (aggregationCapabilitylndicator-r18) information, and the aggregationCapabilitylndicator-r18 information may be used to indicate the capability information of the first terminal.

In S603, a PDU session is established.

In some embodiments, the above-mentioned PDU session includes DRB information.

In S604, the base station transmits first request information to the first terminal, where the first request information is used to request identity information of the at least one second terminal. Accordingly, the first terminal receives the first request information.

For example, the base station transmits the first request information to the first terminal, where the first request information carries other configuration (otherconfig), and the other configuration is used to indicate the first terminal to report the identity information of at least one second terminal. As an example, the first request information may be an RRC reconfiguration message. It should be understood that the present disclosure does not limit the form of the first request information.

In S605, the first terminal transmits RRC reconfiguration complete information to the base station.

In some embodiments, in a case where first terminal has received the RRC reconfiguration message transmitted from the base station, the first terminal transmits the RRC reconfiguration complete information to the base station.

In S606, the first terminal transmits the identity information of the at least one second terminal to the base station. Accordingly, the base station acquires the identity information of the at least one second terminal.

In some embodiments, the first terminal transmits terminal assistance information (UEAssistancelnformation) to the base station, where the UEAssistancelnformation carries newly added aggregation capability indicator (aggregationCapabilitylndicator-r18) information, where the aggregationCapabilitylndicator-r18 information may be used to indicate the identity information of the at least one second terminal.

In S607, the base station performs identity authentication on the at least one second terminal, and acquires context information of the first terminal and context information of the second terminal.

S607 may refer to the description in S205, which will not be repeated herein.

In S608, the base station transmits second configuration information to the at least one second terminal. Accordingly, the at least one second terminal acquires the second configuration information.

S608 may refer to the description in S206, which will not be repeated herein.

In S609, the second terminal transmits second response information to the base station. Accordingly, the base station receives the second response information.

S609 may refer to the description in S207, which will not be repeated herein.

In S610, the base station transmits first configuration information to the first terminal. Accordingly, the first terminal acquires the first configuration information.

S610 may refer to the description in S208, which will not be repeated herein.

In S611, the first terminal transmits first response information to the base station. Accordingly, the base station receives the first response information.

S611 may refer to the description in S209, which will not be repeated herein.

In S612, the base station transmits second scheduling information to at least one second terminal. Accordingly, the at least one second terminal receives the second scheduling information transmitted from the base station.

S612 may refer to the description in S210, which will not be repeated herein.

In S613, the base station transmits first scheduling information to the first terminal. Accordingly, the first terminal receives the first scheduling information transmitted from the base station.

S613 may refer to the description in S211, which will not be repeated herein.

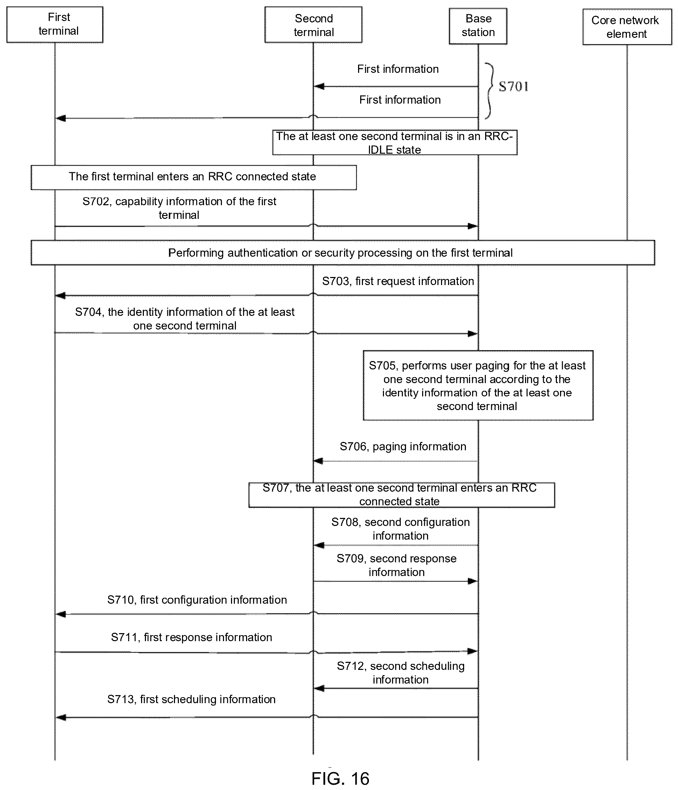

In some other embodiments, when the at least one second terminal is in an idle state, e.g., an RRC-IDLE state or an RRC-Inactive state, the at least one second terminal may also be paged by the base station, so that the second terminal is switched to an RRC connected state, so as to perform aggregation-related configuration on the at least one second terminal. As shown in FIG. 16, the communication method includes the following S701 to S713.

In S701, the base station transmits a first message. Accordingly, the first terminal and/or at least one second terminal receives the first message.

The first message is used to indicate that a current cell supports terminal aggregation.

In some embodiments, the base station broadcasts the first message in the current cell. Accordingly, the first terminal and/or the at least one second terminal residing in the current cell receives the first message.

In some embodiments, the at least one second terminal is in an RRC-IDLE state or an RRC-Inactive state.

In S702, the first terminal transmits capability information of the first terminal to the base station. Accordingly, the base station receives the capability information of the first terminal.

S702 may refer to the description in S202, which will not be repeated herein.

In some embodiments, after receiving the capability information of the first terminal, the base station may perform authentication or security processing on the first terminal.

In S703, the base station transmits first request information to the first terminal, where the first request information is used to request identity information of the at least one second terminal. Accordingly, the first terminal receives the first request information.

S703 may refer to the description in S203, which will not be repeated herein.

In S704, the first terminal transmits the identity information of the at least one second terminal to the base station. Accordingly, the base station acquires the identity information of the at least one second terminal.

S704 may refer to the description in S204, which will not be repeated herein.

In S705, the base station performs user paging for the at least one second terminal according to the identity information of the at least one second terminal.

In some embodiments, the identity information of the second terminal is S-TMSI.

In S706, the base station transmits paging information to the at least one second terminal. Accordingly, the at least one second terminal receives the paging information.

In S707, the at least one second terminal enters an RRC connected state.

In some embodiments, after the paging message is received, the second terminal initiates an RRC connection and enters an RRC connected state.

In S708, the base station transmits second configuration information to the at least one second terminal. Accordingly, the at least one second terminal acquires the second configuration information.

S708 may refer to the description in S206, which will not be repeated herein.

In S709, the second terminal transmits second response information to the base station. Accordingly, the base station receives the second response information.

S709 may refer to the description in S207, which will not be repeated herein.

In S710, the base station transmits first configuration information to the first terminal. Accordingly, the first terminal acquires the first configuration information.

S710 may refer to the description in S208, which will not be repeated herein.

In S711, the first terminal transmits first response information to the base station. Accordingly, the base station receives the first response information.

S711 may refer to the description in S209, which will not be repeated herein.

In S712, the base station transmits second scheduling information to at least one second terminal. Accordingly, the at least one second terminal receives the second scheduling information transmitted from the base station.

S712 may refer to the description in S210, which will not be repeated herein.

In S713, the base station transmits first scheduling information to the first terminal. Accordingly, the first terminal receives the first scheduling information transmitted from the base station.

S713 may refer to the description in S211, which will not be repeated herein.

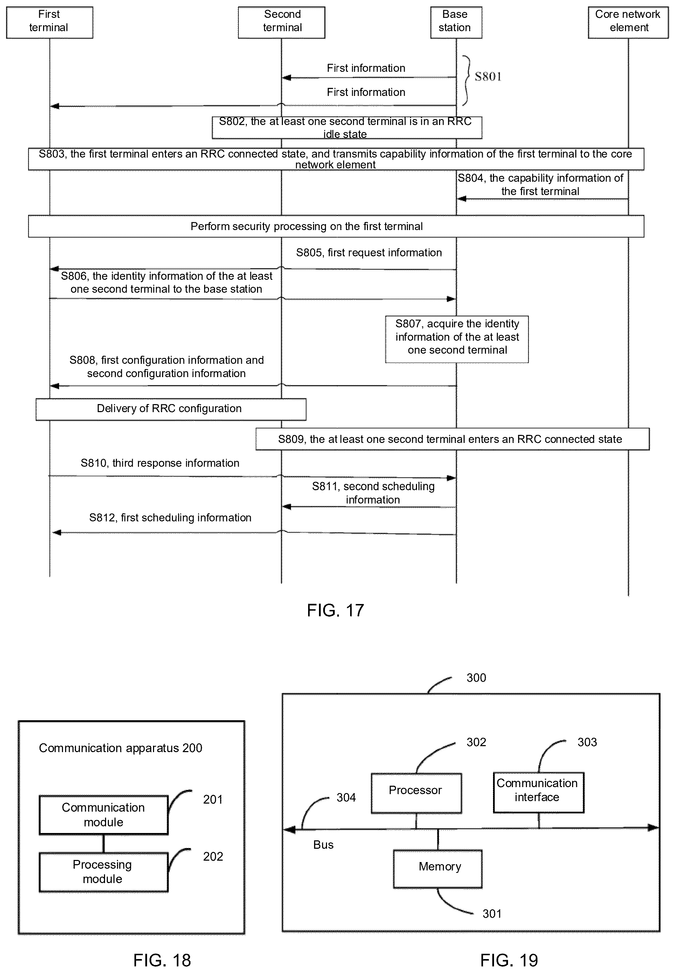

In some embodiments, when the at least one second terminal is in an idle state, e.g., an RRC-IDLE state or an RRC-Inactive state, the first terminal may also trigger the at least one second terminal to initiate an RRC connection, so that the second terminal is switched to an RRC connected state, so as to perform aggregation-related configuration on the at least one second terminal. As shown in FIG. 17, the communication method includes the following S801 to S812.

In S801, the base station transmits a first message. Accordingly, the first terminal and/or the at least one second terminal receives the first message.

S801 may refer to the description in S201, which will not be repeated herein.

In S802, the at least one second terminal is in an RRC idle state.

In some embodiments, the at least one second terminal is in an RRC-IDLE state or an RRC-Inactive state.

In some embodiments, the first terminal triggers the at least one second terminal to enter an RRC connected state.

In S803, the first terminal enters an RRC connected state.

In some embodiments, when the first terminal needs to perform service communication, the first terminal enters the RRC connected state.

In some embodiments, the first terminal further transmits capability information of the first terminal to the core network element. Exemplarily, the first terminal transmits the capability information of the first terminal to the core network element through a NAS message.

In S804, the core network transmits the capability information of the first terminal to the base station. Accordingly, the base station receives the capability information of the first terminal.

S804 may refer to the description in S302, which will not be repeated herein.

In some embodiments, after the core network element transmits the capability information of the first terminal to the base station, the above-mentioned communication method may further include: performing, by the base station, security processing on the first terminal.

In S805, the base station transmits first request information to the first terminal, where the first request information is used to request identity information of the at least one second terminal. Accordingly, the first terminal receives the first request information.

S805 may refer to the description in S303, which will not be repeated herein.

In S806, the first terminal transmits the identity information of the at least one second terminal to the base station.

S806 may refer to the description in S304, which will not be repeated herein.

In S807, the base station acquires the identity information of the at least one second terminal.

In some embodiments, the identity information of the above-mentioned second terminal includes I-RNTI or aggregated UE ID.

In S808, the base station transmits first configuration information and second configuration information to the first terminal. Accordingly, the first terminal acquires the first configuration information and the second configuration information.

S808 may refer to the description in S406, which will not be repeated herein.

In S809, the at least one second terminal enters an RRC connected state.

In some embodiments, when the at least one second terminal has received the configuration information transmitted from the first terminal, e.g., the RRC reconfiguration information or the second configuration information, the at least one second terminal enters the RRC connected state.

In S810, the first terminal transmits third response information to the base station. Accordingly, the base station receives the third response information.

In some embodiments, the third response information is used to indicate whether the reception of first configuration information and the second configuration information succeed or fail.

In some embodiments, the third response information is used to indicate the aggregation of the first terminal succeeds or fails.

In some embodiments, the third response information is RRC reconfiguration complete information. The embodiments of the present disclosure do not limit the implementation form of the third response information.

In S811, the base station transmits second scheduling information to at least one second terminal. Accordingly, the at least one second terminal receives the second scheduling information transmitted from the base station.

S811 may refer to the description in S210, which will not be repeated herein.

In S812, the base station transmits first scheduling information to the first terminal. Accordingly, the first terminal receives the first scheduling information transmitted from the base station.

S812 may refer to the description in S211, which will not be repeated herein.

In the communication method provided in the embodiment of the present disclosure, a first terminal may be aggregated with at least one second terminal, so that the first terminal may perform data transmission with a base station through the at least one second terminal, and thus the transmission power is no longer limited to a transmission power of a single terminal (e.g., a first terminal), thereby increasing the data transmission rate and the throughput.

The solutions of the embodiments of the present disclosure are introduced above in terms of the method. The following further shows a communication apparatus for performing the communication method in any of the above-mentioned embodiments and possible implementations thereof. It can be understood that in order to implement the above-mentioned functions, the communication apparatus contains corresponding hardware structures and/or software modules for executing respective functions. A person skilled in the art should be easy to conceive that algorithm steps of the examples described in combination with the embodiments of the present disclosure may be implemented in hardware or a combination of hardware and computer software in the present disclosure. Whether a certain function is performed in the hardware or the computer software-driven hardware depends on the specific application and restrictive conditions on design of the technical solution. A skilled person may use different methods for each specific application to implement the described functions, but such implementation should not be considered beyond the scope of the present disclosure.

In some embodiments of the present disclosure, the communication apparatus may be divided into functional modules according to the above-mentioned method examples. For example, each functional module may correspond to a respective function in division, or two or more than two functions may be integrated into a functional module. The above-mentioned integrated module may be implemented in the form of hardware, or may be implemented in the form of software. It should be noted that, the division of modules in the embodiments of the present disclosure is schematic, and is only a division according to logical functions, and there may be other division manners in actual implementation. The following is an example of dividing each functional module according to each function.

FIG. 18 is a schematic structural diagram of a communication apparatus provided in the embodiments of the present disclosure. As shown in FIG. 18, the communication apparatus 200 includes: a communication module 201 and a processing module 202.

In some embodiments, the processing module 202 is configured to aggregate at least one second terminal with a first terminal.

In some embodiments, the communication module 201 is configured to perform data transmission with the first terminal based on the at least one second terminal.

In some embodiments, the processing module 202 is configured to, for example: transmit first configuration information to the first terminal, where the first configuration information is used to perform aggregation-related configuration on the first terminal; and transmit second configuration information to the at least one second terminal, where the second configuration information is used to perform aggregation-related configuration on the second terminal.

In some embodiments, the processing module 202 is configured to, for example, transmit the first configuration information and the second configuration information to the first terminal. The first configuration information is used to perform aggregation-related configuration on the first terminal, and the second configuration information is used to perform aggregation-related configuration on the second terminal.

In some embodiments, the first configuration information includes: identification information of the at least one second terminal, and/or configuration information of data radio bearer (DRB) information that needs to be aggregated in the first terminal.

In some embodiments, the configuration information of the data radio bearer (DRB) information that needs to be aggregated in the first terminal includes at least one of: packet data convergence protocol (PDCP) configuration of the DRB information that needs to be aggregated in the first terminal, where the PDCP configuration includes at least one of: aggregation direction indication, aggregation threshold indication, aggregation primary path indication, and duplication indication; radio link control (RLC) configuration of the DRB information that needs to be aggregated in the first terminal; and logical channel (LCH) configuration of the DRB information that needs to be aggregated in the first terminal.

In some embodiments, the second configuration information includes at least one of the following: identification information of the first terminal, and aggregation configuration information of data radio bearer (DRB) information that needs to be aggregated in at least one second terminal.

In some embodiments, the aggregation configuration information of the data radio bearer (DRB) information that needs to be aggregated in the at least one second terminal includes: radio link control (RLC) configuration of the DRB information that needs to be aggregated in the at least one second terminal; and/or, logical channel (LCH) configuration of the DRB information that needs to be aggregated in the at least one second terminal.

In some embodiments, the communication module 201 is configured to, for example: transmit second downlink data to the at least one second terminal; or, transmit second downlink data to the at least one second terminal and transmit first downlink data to the first terminal.

In some embodiments, the communication module 201 is configured to, for example: receive second uplink data transmitted from the at least one second terminal; or receive first uplink data transmitted from the first terminal and receive second uplink data transmitted from the at least one second terminal.

In some embodiments, the communication module 201 is further configured to perform data convergence and/or data delivery on the received uplink data.

In some embodiments, the communication module 201 is further configured to acquire capability information of the first terminal, where the capability information of the first terminal is used to indicate whether the first terminal has aggregation capability.

In some embodiments, the communication module 201 is configured to, for example, receive the capability information of the first terminal transmitted from the first terminal; or receive the capability information of the first terminal transmitted from a core network element.

In some embodiments, the communication module 201 is further configured to acquire identity information of the at least one second terminal.

In some embodiments, the communication module 201 is configured to, for example, receive the identity information of the at least one second terminal transmitted from the core network element; or, receive the identity information of the at least one second terminal transmitted from the first terminal; or, determine the identity information of the at least one second terminal according to an aggregation relationship pre-configured by the base station and the identity information of the first terminal, where the aggregation relationship indicates a correspondence between the identity information of the first terminal and the identity information of the at least one second terminal.

In some embodiments, the identity information of the second terminal includes at least one of: S-temporary mobile subscription identifier (S-TMSI); international mobile subscriber identification number (IMSI) information; cell radio network temporary identifier (C-RNTI), physical cell identity (PCI), and truncated integrity message authentication code short (MAC-I) information; user equipment aggregation identifier (UE aggregation ID) information.

In some embodiments, the communication module 201 is further configured to transmit a paging message to the at least one second terminal according to the identity information of the at least one second terminal in a case where the at least one second terminal is in a radio resource control (RRC) idle state.

In some embodiments, the communication module 201 is further configured to transmit first information, where the first information is used to indicate that a current cell supports terminal aggregation.

In addition, the embodiments of the present disclosure further provide a schematic structural diagram of another communication apparatus. Still referring to FIG. 18, the communication apparatus 200 includes: a communication module 201 and a processing module 202.

In some embodiments, the processing module 202 is configured to aggregate with at least one second terminal.

In some embodiments, the communication module 201 is configured to perform data transmission with the base station based on the at least one second terminal.

In some embodiments, the processing module 202 is configured to, for example, acquire first configuration information, where the first configuration information is used to perform aggregation-related configuration on the first terminal; and aggregate with the at least one second terminal according to the first configuration information.

In some embodiments, the processing module 202 is configured to, for example, acquire second configuration information, where the second configuration information is used to perform aggregation-related configuration on the second terminal; and transmit the second configuration information to the at least one second terminal.

In some embodiments, the second configuration information includes: identification information of the first terminal, and/or configuration information of data radio bearer (DRB) information that needs to be aggregated in the at least one second terminal.

In some embodiments, the aggregation configuration information of the data radio bearer (DRB) information that needs to be aggregated in the at least one second terminal includes: radio link control (RLC) configuration of the DRB information that needs to be aggregated in the at least one second terminal; and/or, logical channel (LCH) configuration of the DRB information that needs to be aggregated in the at least one second terminal.

In some embodiments, the first configuration information includes: identification information of the at least one second terminal, the second terminal being a terminal that can be aggregated with the first terminal; and/or aggregation configuration information of the data radio bearer (DRB) information that needs to be aggregated in the first terminal.

In some embodiments, the aggregation configuration information of the data radio bearer (DRB) information that needs to be aggregated in the first terminal includes at least one of: packet data convergence protocol (PDCP) configuration of the DRB information that needs to be aggregated in the first terminal, where the PDCP configuration includes at least one of: an aggregation direction indication, an aggregation threshold indication, an aggregation primary path indication, and a duplication indication; radio link control (RLC) configuration of the DRB information that needs to be aggregated in the first terminal; and logical channel (LCH) configuration of the DRB information that needs to be aggregated in the first terminal.

In some embodiments, the communication module 201 is configured to, for example: transmit uplink data to the at least one second terminal; or transmit uplink data to the at least one second terminal and the base station.

In some embodiments, the communication module 201 is configured to, for example: receive second downlink data transmitted from the at least one second terminal; or, receive second downlink data transmitted from the at least one second terminal and receive first downlink data transmitted from the base station.

In some embodiments, the communication module 201 is further configured to transmit capability information of the first terminal, where the capability information of the first terminal is used to indicate whether the first terminal has aggregation capability.

In some embodiments, the communication module 201 is configured to, for example, transmit the capability information of the first terminal to a core network element; and/or transmit the capability information of the first terminal to the base station.

In some embodiments, the communication module 201 is further configured to transmit identity information of the at least one second terminal to the base station, where the second terminal is a terminal that can be aggregated with the first terminal.

In some embodiments, the identity information of the second terminal includes at least one of: S-temporary mobile subscription identifier (S-TMSI); international mobile subscriber identification number (IMSI) information; cell radio network temporary identifier (C-RNTI), physical cell identity (PCI), and truncated integrity message authentication code short (MAC-I) information; user equipment aggregation identifier (UE aggregation ID) information.

In addition, the embodiments of the present disclosure further provide a schematic structural diagram of yet another communication apparatus. Still referring to FIG. 18, the communication apparatus 200 includes a communication module 201 and a processing module 202.

In some embodiments, the processing module 202 is configured to aggregate with the first terminal.

In some embodiments, the communication module 201 is configured to assist the first terminal to perform data transmission with the base station.

In some embodiments, the processing module 202 is configured to, for example: acquire second configuration information, where the second configuration information is used to perform aggregation-related configuration on the second terminal; and aggregate with the first terminal according to the second configuration information.

In some embodiments, the processing module 202 is configured to, for example: receive the second configuration information from the first terminal; and/or receive the second configuration information from the base station.

In some embodiments, the second configuration information includes: identification information of the first terminal, and/or aggregation configuration information of data radio bearer (DRB) information that needs to be aggregated in the at least one second terminal.

In some embodiments, the aggregation configuration information of the data radio bearer (DRB) information that needs to be aggregated in the at least one second terminal includes: radio link control (RLC) configuration of the DRB information that needs to be aggregated in the at least one second terminal; and/or, logical channel (LCH) configuration of the DRB information that needs to be aggregated in the at least one second terminal.

In some embodiments, the communication module 201 is configured to, for example: receive second downlink data transmitted from the base station; and transmit the second downlink data to the first terminal.

In some embodiments, the communication module 201 is configured to, for example: receive second uplink data transmitted from the first terminal; and transmit the second uplink data to the base station.

In some embodiments, the processing module 202 is further configured to be switched from a radio resource control (RRC) idle state to an RRC connected state in a case where a paging message has been received.

In a case of implementing the functions of the above-mentioned integrated modules in the form of hardware, the embodiments of the present disclosure further provide a possible structure of a communication apparatus, and the communication apparatus is configured to perform the communication method provided in the embodiments of the present disclosure. As shown in FIG. 19, the communication apparatus 300 includes a processor 302. In some examples, the communication apparatus may further include at least one of: a communication interface 303, a bus 304, and a memory 301.

The processor 302 may implement or execute various illustrative logical blocks, modules and circuits described in conjunction with the present disclosure. The processor 302 may be a central processing unit, a general-purpose processor, a digital signal processor, an application specific integrated circuit, a field programmable gate array or other programmable logic device, a transistor logic device, a discrete hardware component or any combination thereof. It may implement or execute various illustrative logical blocks, modules and circuits described in content of the present disclosure. The processor 302 may also be a combination capable of implementing computing functions, for example, a combination of one or more microprocessors, or a combination of a digital signal processor (DSP) and a microprocessor.

The communication interface 303 is configured to connect with other devices through a communication network. The communication network may be an Ethernet, a wireless access network, a wireless local area network (WLAN), etc.

The memory 301 may be, but is not limited to, a read-only memory (ROM) or a static storage device of other type capable of storing static information and instructions, a random access memory (RAM) or a dynamic storage device of other type capable of storing information and instructions, or an electrically erasable programmable read-only memory (EEPROM), a magnetic disk storage medium or other magnetic disk storage device, or any other medium capable of being used to carry or store desired program codes and capable of being accessed by a computer, where the desired program codes have instructions or are in the form of data structure.

As a possible implementation, the memory 301 may exist independently of the processor 302, and the memory 301 may be connected to the processor 302 through the bus 304, and is used for storing instructions or program codes, for example, computer program instructions, etc. The processor 302, upon calling and executing the instructions or program codes stored in the memory 301, can implement the communication method provided in the embodiments of the present disclosure.

In another possible implementation, the memory 301 may be integrated with the processor 302.

The bus 304 may be an extended industry standard architecture (EISA) bus, etc. The bus 304 may be classified into an address bus, a data bus, and a control bus. For ease of representation, only one thick line is used in FIG. 19 for representation, but it does not mean that there is only one bus or one type of bus.

Some embodiments of the present disclosure further provide a computer-readable storage medium (e.g., a non-transitory computer-readable storage medium); the computer-readable storage medium has computer program instructions stored thereon; and the computer program instructions, upon being executed on a computer (e.g., the above-mentioned communication apparatus, communication apparatus, base station, first terminal, second terminal and processors thereof), cause the computer to perform the communication method in any one of the above-mentioned embodiments. It should be understood that the present disclosure is not limited to the form of the computer.

In some example, the above-mentioned computer-readable storage medium may include, but is not limited to, a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer-readable storage mediums described in the present disclosure may represent one or more devices and/or other machine-readable storage mediums for storing information for storing information. The term "machine-readable storage medium" may include, but not limited to, wireless channels and various other mediums capable of storing, containing, and/or carrying instructions and/or data.

The embodiments of the present disclosure further provide a computer program product containing instructions; and the computer program product, upon being executed on a computer, causes the computer to perform the communication method in any one of the above-mentioned embodiments.

The above are only specific implementations of the present disclosure, but the protection scope of the present disclosure is not limited thereto, and any variations or replacements within the technical scope disclosed in the present disclosure shall fall within the protection scope of the present disclosure. Therefore, the protection scope of the present disclosure should be based on the protection scope of the claims.

## Claims

1. A communication method, applied to a base station, **characterized by** comprising:
aggregating at least one second terminal with a first terminal; and
performing, based on the at least one second terminal, data transmission with the first terminal.

2. The method according to claim 1, wherein the aggregating the at least one second terminal with the first terminal, comprises:
transmitting first configuration information to the first terminal, wherein the first configuration information is used to perform aggregation-related configuration on the first terminal; and
transmitting second configuration information to the at least one second terminal, wherein the second configuration information is used to perform aggregation-related configuration on the second terminal.

3. The method according to claim 1, wherein the aggregating the at least one second terminal with the first terminal, comprises:
transmitting first configuration information and second configuration information to the first terminal;
wherein the first configuration information is used to perform aggregation-related configuration on the first terminal, and the second configuration information is used to perform aggregation-related configuration on the second terminal.

4. The method according to claim 2 or 3, wherein the first configuration information comprises: identification information of the at least one second terminal, and/or configuration information of data radio bearer, DRB, information that needs to be aggregated in the first terminal.

5. The method according to claim 4, wherein the configuration information of the data radio bearer, DRB, information that needs to be aggregated in the first terminal comprises at least one of:
packet data convergence protocol, PDCP, configuration of the DRB information that needs to be aggregated in the first terminal, wherein the PDCP configuration comprises at least one of: an aggregation direction indication, an aggregation threshold indication, an aggregation primary path indication, and a duplicate replication indication;
radio link control, RLC, configuration of the DRB information that needs to be aggregated in the first terminal; and
logical channel, LCH, configuration of the DRB information that needs to be aggregated in the first terminal.

6. The method according to claim 2 or 3, wherein the second configuration information comprises at least one of: identification information of the first terminal, and aggregation configuration information of data radio bearer, DRB, information that needs to be aggregated in the at least one second terminal.

7. The method according to claim 6, wherein the aggregation configuration information of the data radio bearer, DRB, information that needs to be aggregated in the at least one second terminal comprises:
radio link control, RLC, configuration of the DRB information that needs to be aggregated in the at least one second terminal; and/or,
logical channel, LCH, configuration of the DRB information that needs to be aggregated in the at least one second terminal.

8. The method according to claim 1, wherein the performing, based on the at least one second terminal, the data transmission with the first terminal, comprises:
transmitting second downlink data to the at least one second terminal; or,
transmitting second downlink data to the at least one second terminal, and transmitting first downlink data to the first terminal.

9. The method according to claim 1, wherein the performing, based on the at least one second terminal, the data transmission with the first terminal, comprises:
receiving second uplink data transmitted from the at least one second terminal; or,
receiving first uplink data transmitted from the first terminal and second uplink data transmitted from the at least one second terminal.

10. The method according to claim 9, further comprising,
performing data convergence and/or data delivery on the first uplink data or the second uplink data that is received.

11. The method according to claim 1, further comprising:
acquiring capability information of the first terminal, wherein the capability information of the first terminal is used to indicate whether the first terminal has aggregation capability.

12. The method according to claim 11, wherein the acquiring the capability information of the first terminal comprises:
receiving the capability information of the first terminal transmitted from the first terminal; or,
receiving the capability information of the first terminal transmitted from a core network element.

13. The method according to claim 1, further comprising:
acquiring identity information of the at least one second terminal.

14. The method according to claim 13, wherein the acquiring the identity information of the at least one second terminal comprises:
receiving the identity information of the at least one second terminal transmitted from a core network element; or,
receiving the identity information of the at least one second terminal transmitted from the first terminal; or,
determining the identity information of the at least one second terminal according to an aggregation relationship pre-configured by the base station and the identity information of the first terminal, wherein the aggregation relationship is used to indicate a correspondence between the identity information of the first terminal and the identity information of the at least one second terminal.

15. The method according to claim 13, wherein the identity information of the at least one second terminal comprises at least one of:
S-temporary mobile subscription identifier, S-TMSI;
international mobile subscriber identification number, IMSI, information;
cell radio network temporary identifier, C-RNTI, physical cell identity, PCI, and truncated integrity message authentication code short, MAC-I, information;
user equipment aggregation identifier, UE aggregation ID, information.

16. The method according to claim 13, further comprising:
in a case where the at least one second terminal is in a radio resource control, RRC, idle state, transmitting a paging message to the at least one second terminal according to the identity information of the at least one second terminal.

17. The method according to claim 1, further comprising:
transmitting first information, wherein the first information is used to indicate that a current cell supports terminal aggregation.

18. A communication method, applied to a first terminal, **characterized by** comprising:
aggregating with at least one second terminal;
performing, based on the at least one second terminal, data transmission with a base station.

19. A communication method, applied to a second terminal, **characterized by** comprising:
aggregating with a first terminal; and
assisting the first terminal to perform data transmission with a base station.

20. A computer-readable storage medium, **characterized in that**
the computer-readable storage medium has computer instructions stored thereon, and the computer instructions, upon being executed on a computer, enable the computer to perform the method according to any one of claims 1 to 19.
